# EUROPÄISCHE PATENTANMELDUNG

(11) **EP 2 282 485 A1**
(43) Veröffentlichungstag der Anmeldung: **09.02.2011**
(21) Anmeldenummer: 10170801.4
(22) Anmeldetag: 26.07.2010
(51) Int. Cl.: H04L 29/12, H04W 8/26

(54) **Verfahren zur Zuweisung einer eindeutigen Kennung zu einer Mobilitätsmanagementeinheit und zur Implementierung einer Mobilitätsmanagementeinheit in einem Kernnetzwerk eines SAE/LTE-Kommunikationssystems sowie eine Mobilitätsmanagementeinheit**

(30) Priorität: 30.07.2009 DE 102009035366
(71) Anmelder: Vodafone Holding GmbH, 40213 Düsseldorf (DE)
(72) Erfinder: Kulakov, Alexei, 40595, Düsseldorf (DE); Lu, Yang, 40489, Düsseldorf (DE); Wild, Peter, 47807, Krefeld (DE)
(74) Vertreter: Müller & Schubert

(57) **Zusammenfassung**

Die vorliegende Erfindung betrifft ein Verfahren zur Zuweisung eindeutigen Kennungen zu einer Mobilitätsmanagementeinheit in einem Kernnetzwerk eines SAE/LTE-Kommunikationssystems sowie ein Verfahren zur Implementieren einer Mobilitätsmanagementeinheit in ein Kernnetzwerk eines SAE/LTE-Kommunikationssystems. Ferner betrifft die Erfindung eine Mobilitätsmanagementeinheit eines Kernnetzwerkes eines SAE/LTE-Kommunikationssystems.

## Beschreibung

Die vorliegende Erfindung betrifft ein Verfahren zur Zuweisung einer eindeutigen Kennung zu einer Mobilitätsmanagementeinheit in einem Kernnetzwerk eines SAE/LTE-Kommunikationssystems sowie ein Verfahren zur Implementieren einer Mobilitätsmanagementeinheit in ein Kernnetzwerk eines SAE/LTE-Kommunikationssystems. Ferner betrifft die Erfindung eine Mobilitätsmanagementeinheit eines Kernnetzwerkes eines SAE/LTE-Kommunikationssystems.

Neueste Entwicklungen zeigen, dass es im Mobilfunkbereich gewünscht ist, immer größere Datenmengen zu übertragen. Bestehende Mobilfunkstandards, wie beispielsweise GSM oder UMTS, reichen zukünftig nicht mehr aus, um diese Mengen an Daten zu übertragen. Das 3GPP-Konsortium (3GPP = Third Generation Partnership Project) hat sich daher zum Ziel gesetzt, für die nächste Generation der Mobilfunksysteme unter anderem die Datenratenübertragungsleistung, die Übertragungszeiten sowie die Kapazitäten zu erhöhen. Derartige Bemühungen werden als Systemarchitekturentwicklungen (SAE = System Architecture Evolution) und/oder Langzeitentwicklung (LTE- Long Term Evolution) bezeichnet. Mit der neuen Systemarchitektur soll die bisher vorhandene Leitungsvermittlung vollständig durch eine Paketvermittlung ersetzt werden.

Ein derartiges SAE/LTE-Kommunikationssystem umfasst ein Zugangsnetzwerk bzw. Funknetzwerk, das sogenannte Radio Access Network (RAN), sowie ein Kernnetzwerk, das sogenannte Core Network (CN). Dabei unterstützt das neue SAE/LTE-Kommunikationssystem den gleichzeitigen Betrieb unterschiedlicher Zugangsnetzwerke. Dies bedeutet, dass die Systemarchitekturentwicklung beispielsweise die Mobilität, das Handover und das Roaming zwischen den unterschiedlichen Zugangsnetzwerken ermöglicht. Beispielsweise kann ein derartiges Zugangsnetzwerk/Funknetzwerk das UTRAN (UTRAN = Universal Terrestrial Radio Access Network) sein. Das Kernnetzwerk weist Funktionseinheiten auf. Eine Benutzerebeneneinheit ist für die Benutzerebene definiert und eine Steuerebeneneinheit ist für die Steuerebene definiert. Die Benutzerebeneneinheit umfasst zwei logische Gateways, nämlich das sogenannte Serving-Gateway und das Packet Data Network-Gateway. Das Serving-Gateway terminiert die Schnittstellen zum Zugangsnetzwerk/Funknetzwerk (RAN). Das Packet Data Network-Gateway terminiert die Schnittstelle zum Paket-Daten-Netzwerk. Beispielsweise ordnet das Packet Data Network-Gateway dem Benutzerendgerät eine IP-Adresse zu. Teil der Steuerebeneneinheit ist beispielsweise die sogenannte Mobilitätsmanagementeinheit (MME = Mobility Management Entity). Eine Mobilitätsmanagementeinheit hat verschiedene Funktionen. So wird z.B. die Signalisierung für Kontrollzwecke, beispielsweise für die Mobilität, durch die Mobilitätsmanagementeinheit behandelt. So kann eine Mobilitätsmanagementeinheit unter anderem für Kontrollmeldungen bzw. die Signalisierung im Zusammenhang mit der Anmeldung, der Lokalisierung, der Authentifizierung und dem Roaming zuständig sein. Ferner kann eine Mobilitätsmanagementeinheit für die Verteilung von Pager-Meldungen an die Basisstationen des Zugangsnetzwerkes/Funknetzwerkes, den sogenannten eNBs bzw. eNode Bs, zuständig sein. Diese Basisstationen des Zugangsnetzwerkes/Funknetzwerkes sind über sogenannte S1-Schnittstellen mit den Mobilitätsmanagementeinheiten verbunden.

Dabei können in dem SAE/LTE-Kommunikationssystem die S1-Schnittstellen flexibel benutzt werden. D.h., eine Basisstation (eNB) kann über S1-Schnittstellen gleichzeitig zu verschiedenen Mobilitätsmanagementeinheiten verbunden sein. Jede Mobilitätsmanagementeinheit weist eine Vielzahl von Parametern und zumindest eine eindeutige Kennung auf, denen Werte zugewiesen werden müssen um eine Verbindung zu den Basisstationen herzustellen. Derzeit werden diesen Parametern und der zumindest einen eindeutigen Kennung durch eine sogenannte Konfigurationseinheit-Einheit, insbesondere durch ein Planungstool bzw. Konfigurationstool auf einem Server, vergeben, wobei ein menschliches Mitwirken in der Planungsphase gegeben sein muss. D.h., ein Netzbetreiber muss sicherstellen, dass die vergebenen Kennungen für die Mobilitätsmanagementeinheiten eindeutig vergeben werden, d.h. jede Kennung nur einmal innerhalb des Kernnetzwerkes eines Netzanbieters vergeben wird. Dies bedeutet einen manuellen Mehraufwand für den Netzbetreiber. Wird beispielsweise eine neue Mobilitätsmanagementeinheit dem Kernnetzwerk hinzugefügt, muss der Netzbetreiber mittels der Konfigurationseinheit-Einheit eine neue eindeutige Kennung für diese neu hinzugekommene Mobilitätsmanagementeinheit vergeben. Dies bedeutet einen erhöhten Aufwand für den Netzbetreiber. Gleiches gilt, wenn bereits vorhandene Mobilitätsmanagementeinheit neu gekennzeichnet werden müssen.

Der Erfindung liegt daher die Aufgabe zugrunde, Verfahren und eine Mobilitätsmanagementeinheit bereitzustellen, durch die die Zuordnung von eindeutigen Kennungen zu Mobilitätsmanagementeinheiten in einem Kernnetzwerk eines SAE/LTE-Kommunikationssystems bzw. durch die die Implementierung einer neu zu einem Kernnetzwerk eines SAE/LTE-Kommunikationssystems hinzugekommenen Mobilitätsmanagementeinheit vereinfacht wird.

Erfindungsgemäß wird diese Aufgabe durch ein erstes Verfahren zur Zuweisung einer eindeutigen Kennung zu einer Mobilitätsmanagementeinheit in einem Kernnetzwerk eines SAE/LTE-Kommunikationssystems mit den Merkmalen gemäß dem unabhängigen Patentanspruch 1, durch ein Verfahren zur Implementieren einer Mobilitätsmanagementeinheit in ein Kernnetzwerk eines SAE/LTE-Kommunikationssystems mit den Merkmalen gemäß dem unabhängigen Patentanspruch 12 sowie durch eine Mobilitätsmanagementeinheit eines Kernnetzwerkes eines SAE/LTE-Kommunikationssystems mit den Merkmalen gemäß dem unabhängigen Patentanspruch 13 gelöst. Weitere Merkmale und Details der Erfindung ergeben sich aus den Unteransprüchen, der Beschreibung sowie den Zeichnungen. Dabei gelten Merkmale und Details, die im Zusammenhang mit dem erfindungsgemäßen Verfahren gemäß Patentanspruch 1 beschrieben sind, selbstverständlich auch im Zusammenhang mit dem erfindungsgemäßen Verfahren gemäß Patentanspruch 12 sowie der erfindungsgemäßen Mobilitätsmanagementeinheit gemäß Patentanspruch 13, und jeweils umgekehrt, so dass bezüglich der Offenbarung zu den einzelnen Erfindungsaspekten stets wechselseitig Bezug genommen wird.

Gemäß dem ersten Aspekt der Erfindung wird die Aufgabe durch ein Verfahren zur Zuweisung einer eindeutig Kennung zu einer Mobilitätsmanagementeinheit in einem Kernnetzwerk eines SAE/LTE-Kommunikationssystems gelöst, wobei das Verfahren durch folgende Schritte gekennzeichnet ist:
a1) Bereitstellen wenigstens einer ersten Kennung an eine Mobilitätsmanagementeinheit,
b1) Übertragen der wenigstens einen ersten Kennung von der Mobilitätsmanagementeinheit an eine Auswahl von anderen Mobilitätsmanagementeinheiten und/oder Übertragen von der Auswahl von anderen Mobilitätsmanagementeinheiten zugeordneten weiteren Kennungen an die Mobilitätsmanagementeinheit,
c1) Vergleichen der weiteren Kennungen mit der wenigstens einen ersten Kennung zur Feststellung der Eindeutigkeit der wenigstens einen ersten Kennung,
d1) Zuweisen der wenigstens einen ersten Kennung zu der Mobilitätsmanagementeinheit bei Feststellung der Eindeutigkeit der wenigstens einen ersten Kennung.

In einem ersten Schritt erhält die Mobilitätsmanagementeinheit wenigstens eine erste Kennung. Diese wenigstens eine erste Kennung wird von der Mobilitätsmanagementeinheit an eine Auswahl von anderen Mobilitätsmanagementeinheiten übertragen. Alternativ oder zusätzlich können die anderen Mobilitätsmanagementeinheiten ihre jeweiligen Kennungen an die Mobilitätsmanagementeinheit übertragen. Anschließend erfolgt ein Vergleich der weiteren Kennungen der anderen Mobilitätsmanagementeinheiten mit der wenigstens einen ersten Kennung der Mobilitätsmanagementeinheit zur Feststellung der Eindeutigkeit der wenigstens einen ersten Kennung. D.h., es findet eine Überprüfung statt, ob die wenigstens eine erste Kennung, die der Mobilitätsmanagementeinheit bereitgestellt worden ist, bereits eine andere Mobilitätsmanagementeinheit kennzeichnet. Bei Feststellung der Eindeutigkeit der wenigstens einen ersten Kennung wird die wenigstens einen ersten Kennung der Mobilitätsmanagementeinheit zugewiesen.

Die Mobilitätsmanagementeinheit ist Teil des Kernnetzwerkes des SAE/LTE-Kommunikationssystems, d.h. ist in dem Kernnetzwerk des SAE/LTE-Kommunikationssystems implementiert.

D.h., nach der Feststellung, dass keiner der anderen Mobilitätsmanagementeinheiten die wenigstens eine erste Kennung zugeordnet ist, wird die wenigstens eine erste Kennung der Mobilitätsmanagementeinheit zugeordnet. Dabei kann sich die Mobilitätsmanagementeinheit die erste Kennung vorteilhafterweise selbst zuordnen. D.h., erst nach der Überprüfung, dass die wenigstens eine erste Kennung nicht bereits eine andere Mobilitätsmanagementeinheit in dem Kernnetzwerk kennzeichnet, ordnet sich die Mobilitätsmanagementeinheit die wenigstens eine erste Kennung selbst zu, so dass die Mobilitätsmanagementeinheit eindeutig und unverwechselbar innerhalb des Kernnetzwerkes gekennzeichnet ist.

Ein Vorteil dieses Verfahren ist, dass der Mobilitätsmanagementeinheit, der eine eindeutige Kennung zugeordnet werden soll, lediglich wenigstens eine erste Kennung bereitgestellt werden muss. Die Überprüfung, ob diese bereitgestellte wenigstens eine erste Kennung bereits einer anderen Mobilitätsmanagementeinheit innerhalb des Kernnetzwerkes zugeordnet ist, erfolgt automatisch und selbstständig durch die Mobilitätsmanagementeinheit bzw. durch eine Interaktion der Mobilitätsmanagementeinheit mit den anderen Mobilitätsmanagementeinheiten. Bei der Feststellung, dass die bereitgestellte wenigstens eine erste Kennung noch nicht an andere Mobilitätsmanagementeinheiten vergeben ist, ordnet sich die Mobilitätsmanagementeinheit die erste, d.h. die eindeutige, Kennung selbst zu. Im Falle, dass die bereitgestellte wenigstens eine erste Kennung bereits einer anderen Mobilitätsmanagementeinheit zugeordnet ist, können weitere erste Kennungen übertragen und verglichen werden.

Dieses Verfahren stellt auf eine einfache Art und Weise sicher, dass einer Mobilitätsmanagementeinheit eine eindeutige Kennung innerhalb des Kernnetzwerkes eines SAE/LTE-Kommunikationssystems zugeordnet wird. Dabei erfolgt die Zuordnung vorteilhafterweise automatisch durch die Mobilitätsmanagementeinheit. Der Mobilitätsmanagementeinheit, der eine eindeutige Kennung zugeordnet werden soll, wird lediglich wenigstens eine erste Kennung zu Verfügung gestellt.

Bevorzugt ist bei dem Verfahren, wenn die wenigstens eine erste Kennung von einer Konfigurationsdatenbank über eine Datenverbindung bereitgestellt wird. D.h., die Konfigurationsdatenbank stellt über eine Datenverbindung einer Mobilitätsmanagementeinheit wenigstens eine erste Kennung zur Verfügung. Die Mobilitätsmanagementeinheit übernimmt vorteilhafterweise zumindest eine der wenigstens einen ersten Kennung. Über Schnittstellen, insbesondere sogenannte S11-Schnittstellen, wird in einer Interaktion zwischen der Mobilitätsmanagementeinheit mit anderen Mobilitätsmanagementeinheiten des Kernnetzwerkes die wenigstens eine erste Kennung von der Mobilitätsmanagementeinheit zu den anderen Mobilitätsmanagementeinheiten und/oder werden die weiteren Kennungen der anderen Mobilitätsmanagementeinheiten zu der Mobilitätsmanagementeinheit übertragen. In einem Auswerteschritt werden die Kennungen aller Mobilitätsmanagementeinheiten miteinander verglichen und bei Feststellung, dass keiner der anderen Mobilitätsmanagementeinheiten die bereitgestellte wenigstens eine erste Kennung zugeordnet ist, ordnet sich die Mobilitätsmanagementeinheit die bereitgestellte wenigstens eine erste Kennung vorzugsweise selber zu.

Nach dem Aufbau einer Datenverbindung zwischen der Konfigurationsdatenbank und der Mobilitätsmanagementeinheit, die insbesondere über eine sogenannte S12-Schnittstelle erfolgt, kann die Konfigurationsdatenbank der Mobilitätsmanagementeinheit, der eine eindeutige Kennung zugewiesen werden soll, wenigstens eine erste Kennung zur Verfügung stellen. Dabei kann die Konfigurationsdatenbank der Mobilitätsmanagementeinheit nur eine einzige erste Kennung zur Verfügung stellen oder aber mehrere erste Kennungen. In einem nächsten Schritt übernimmt die Mobilitätsmanagementeinheit die erste Kennung oder eine erste Kennung aus den mehreren ersten Kennungen. Anschließend wird/werden über Schnittstellen, insbesondere sogenannte S11-Schnittstellen, die vorzugsweise offene Schnittstellen darstellen, in einer Interaktion zwischen der Mobilitätsmanagementeinheit mit anderen Mobilitätsmanagementeinheiten des Kernnetzwerkes die übernommene eindeutige Kennung von der Mobilitätsmanagementeinheit zu den anderen Mobilitätsmanagementeinheiten und/oder die eindeutigen Kennungen der anderen Mobilitätsmanagementeinheiten zu der Mobilitätsmanagementeinheit übertragen. In einem Auswerteschritt werden die eindeutigen Kennungen aller Mobilitätsmanagementeinheiten miteinander verglichen. Bei Feststellung, dass keiner der anderen Mobilitätsmanagementeinheiten die übernommene eindeutige Kennung zugeordnet ist, ordnet sich die Mobilitätsmanagementeinheit die übernommene eindeutige Kennung zu.

Die Konfigurationsdatenbank ist bevorzugt Teil des Kernnetzwerkes des SAE/LTE-Kommunikationssystems. Die Mobilitätsmanagementeinheit, der eine eindeutige Kennung zugewiesen werden soll, wird mit der Konfigurationsdatenbank derart verbunden, dass zwischen der Konfigurationsdatenbank und der Mobilitätsmanagementeinheit Daten ausgetauscht werden können. Dies erfolgt insbesondere über eine sogenannte S12-Schnittstelle.

Gemäß einer bevorzugten Weiterentwicklung der Erfindung kann bei dem Verfahren vorgesehen sein, dass die Auswahl von anderen Mobilitätsmanagementeinheiten die direkten Nachbarn der Mobilitätsmanagementeinheit aufweist. Die Auswahl kann auf eine oder mehrere Gruppen von Mobilitätsmanagementeinheiten beschränkt werden. Insbesondere wird die Auswahl auf die direkten Nachbarn der Mobilitätsmanagementeinheit beschränkt, wobei die Nachbarnmobilitätsmanagementeinheiten Mobilitätsmanagementeinheiten sein können, die beispielsweise über gleiche Bereiche eines Zugangsnetzwerkes, d.h. über dieselben Basisstationen eines Zugangsnetzwerkes, angesprochen werden.

Der Vergleich der weiteren Kennungen der anderen Mobilitätsmanagementeinheiten mit der wenigstens einen ersten Kennung kann in der Mobilitätsmanagementeinheit und/oder in einer Mobilitätsmanagementeinheit aus der Auswahl von anderen Mobilitätsmanagementeinheiten erfolgen. D.h., entweder überprüft die Mobilitätsmanagementeinheit, der eine eindeutige Kennung zugewiesen werden soll, ob eine der weiteren Kennungen der anderen Mobilitätsmanagementeinheiten mit der bereitgestellten wenigstens einen ersten Kennung übereinstimmt oder eine Mobilitätsmanagementeinheit der anderen Mobilitätsmanagementeinheiten führt diese Überprüfung durch.

Wenn die Überprüfung der Kennungen durch eine andere Mobilitätsmanagementeinheit durchgeführt wird, kann bei der Feststellung, dass die wenigstens eine erste Kennung noch keiner anderen Mobilitätsmanagementeinheit zugeordnet ist, die Mobilitätsmanagementeinheit der anderen Mobilitätsmanagementeinheiten, die die Überprüfung durchgeführt hat, der Mobilitätsmanagementeinheit, der eine eindeutige Kennung zugewiesen werden soll, dies mitteilen, so dass diese sich die wenigstens eine erste Kennung selber zuordnen kann. Alternativ kann die Mobilitätsmanagementeinheit, die die Überprüfung durchgeführt hat, der Mobilitätsmanagementeinheit, der eine eindeutige Kennung zugewiesen werden soll, die wenigstens eine erste Kennung zuweisen.

Gemäß einer zweckmäßigen ersten Weiterentwicklung der Erfindung kann bei dem Verfahren vorgesehen sein, dass in Schritt b1) die Mobilitätsmanagementeinheit die bereitgestellte wenigstens eine erste Kennung zu den anderen Mobilitätsmanagementeinheiten des Kernnetzwerkes zusammen mit der Anfrage, ob diesen die übernommene eindeutige Kennung zugeordnet ist, überträgt und dass in Schritt c1) die Mobilitätsmanagementeinheit anhand von Antwortnachrichten der anderen Mobilitätsmanagementeinheiten überprüft, ob Übereinstimmungen der Kennungen vorliegen. D.h., die Mobilitätsmanagementeinheit sendet die bereitgestellte wenigstens eine erste Kennung über Schnittstellen, insbesondere sogenannte S11-Schnittstellen, die vorzugsweise offene Schnittstellen darstellen, zu anderen Mobilitätsmanagementeinheiten des Kernnetzwerkes. Ferner sendet die Mobilitätsmanagementeinheit eine Anfrage zu den anderen Mobilitätsmanagementeinheiten, in der sie anfragt, ob diesen die wenigstens eine erste Kennung bereits zugeordnet ist. Anschließend überprüft die Mobilitätsmanagementeinheit, ob Antwortnachrichten von den anderen Mobilitätsmanagementeinheiten hinsichtlich Übereinstimmungen der wenigstens einen ersten Kennung vorliegen. Liegen Antwortnachrichten vor, so überprüft die Mobilitätsmanagementeinheit, ob den anderen Mobilitätsmanagementeinheiten, die geantwortet hat, die wenigstens eine erste Kennung zugeordnet ist oder nicht. Liegen keine Antwortnachrichten vor, insbesondere nach Ablauf einer bestimmten Zeitspanne, so interpretiert die Mobilitätsmanagementeinheit dies so, als ob den anderen Mobilitätsmanagementeinheiten die wenigstens eine erste Kennung nicht zugeordnet ist.

Es ist nicht zwingend erforderlich, dass die anderen Mobilitätsmanagementeinheiten, denen die Mobilitätsmanagementeinheit, der eine eindeutige Kennung zugeordnet werden soll, eine Anfrage gesendet hat, ob ihnen die wenigstens eine erste Kennung zugeordnet ist, eine Antwortnachricht zusenden. So kann vorgesehen sein, dass die anderen Mobilitätsmanagementeinheiten keine Antwortnachricht zu der fragenden Mobilitätsmanagementeinheit senden, wenn ihnen die wenigstens eine erste Kennung nicht zugeordnet ist. Die fragende Mobilitätsmanagementeinheit kann das Fehlen von Antwortnachrichten so interpretieren, als ob den anderen Mobilitätsmanagementeinheiten die wenigstens eine erste Kennung nicht zugeordnet ist.

Es ist jedoch vorteilhaft, wenn die anderen Mobilitätsmanagementeinheiten nach dem Empfang der von der Mobilitätsmanagementeinheit übertragenen wenigstens einen ersten Kennung und der Anfrage der Mobilitätsmanagementeinheit, ob ihnen die wenigstens eine erste Kennung bereits zugeordnet ist, jeweils eine Antwortnachricht zu der Mobilitätsmanagementeinheit übertragen, in denen die Mobilitätsmanagementeinheiten angeben, ob ihnen die von der Mobilitätsmanagementeinheit übertragene wenigstens eine erste Kennung zugeordnet oder nicht zugeordnet ist. Dies ist insbesondere dann vorteilhaft, wenn sich herausstellt, dass die wenigstens eine erste Kennung bereits einer anderen Mobilitätsmanagementeinheit zugeordnet ist. Durch die Rückmeldungen der anderen Mobilitätsmanagementeinheiten kann die Mobilitätsmanagementeinheit, der eine eindeutige Kennung zugeordnet werden soll, der Konfigurationsdatenbank mitteilen, dass die zur Verfügung gestellte wenigstens eine erste Kennung bereits vergeben ist. Die Konfigurationsdatenbank kann diese erste Kennung aus ihrer Auswahl an eindeutigen Kennungen streichen und der Mobilitätsmanagementeinheit eine weitere erste Kennung zur Verfügung stellen. D.h., vorteilhaft ist daher ein Verfahren, bei dem zusätzlich bei der Feststellung, dass einer der anderen Mobilitätsmanagementeinheiten die wenigstens eine erste Kennung bereits zugeordnet ist, die Mobilitätsmanagementeinheit dies der Konfigurationsdatenbank, insbesondere in Form einer Nachricht, mitteilt und die Konfigurationsdatenbank der Mobilitätsmanagementeinheit eine andere erste Kennung zur Verfügung stellt. Die Schritte b1) bis d1) gemäß Anspruch 1 werden dann entsprechend mit der weiteren ersten Kennung erneut durchgeführt, bis festgestellt wird, dass eine erste Kennung noch keiner anderen Mobilitätsmanagementeinheit zugeordnet ist.

Während bei dem Verfahren gemäß der ersten Weiterentwicklung der Erfindung die Mobilitätsmanagementeinheit nach Empfang der wenigstens einen ersten Kennung die bereitgestellte wenigstens eine erste Kennung über Schnittstellen zu anderen Mobilitätsmanagementeinheiten des Kernnetzwerkes sendet und in einer Anfrage bei den anderen Mobilitätsmanagementeinheiten anfragt, ob diesen die wenigstens eine erste Kennung bereits zugeordnet ist, kann gemäß einer zweckmäßigen zweiten Weiterentwicklung der Erfindung bei dem Verfahren vorgesehen sein, dass in Schritt b1) die Mobilitätsmanagementeinheit in einer Anfrage bei den anderen Mobilitätsmanagementeinheiten anfragt, welche weitere Kennungen diesen Mobilitätsmanagementeinheiten zugeordnet sind. D.h., die Mobilitätsmanagementeinheit teilt bei dem Verfahren gemäß der zweiten Weiterentwicklung der Erfindung den anderen Mobilitätsmanagementeinheiten nicht mit, welche wenigstens eine erste Kennung ihr bereitgestellt worden ist. Die Mobilitätsmanagementeinheit sendet lediglich eine Anfrage an die anderen Mobilitätsmanagementeinheiten, in der sie nach den weiteren Kennungen der anderen Mobilitätsmanagementeinheiten anfragt. Anschließend überprüft die Mobilitätsmanagementeinheit anhand der Rückantworten der anderen Mobilitätsmanagementeinheiten, ob die ihr bereitgestellte wenigstens eine erste Kennung noch frei ist oder nicht.

Bei der Feststellung, dass keiner der anderen Mobilitätsmanagementeinheiten die wenigstens eine erste Kennung zugeordnet ist, ordnet sich die Mobilitätsmanagementeinheit die wenigstens eine erste Kennung zu. Anderenfalls teilt die Mobilitätsmanagementeinheit der Konfigurationsdatenbank mit, dass die wenigstens eine erste Kennung bereits an eine andere Mobilitätsmanagementeinheit vergeben ist. Die Konfigurationsdatenbank stellt dann der Mobilitätsmanagementeinheit eine andere erste Kennung zur Verfügung und das Verfahren wird erneut durchgeführt. Der Vorteil bei diesem Verfahren ist ebenfalls, dass die Überprüfung, ob eine der anderen Mobilitätsmanagementeinheiten durch die von der Mobilitätsmanagementeinheit übernommene wenigstens eine erste Kennung gekennzeichnet ist, die Mobilitätsmanagementeinheit übernimmt. Die Konfigurationsdatenbank braucht lediglich der Mobilitätsmanagementeinheit eine oder mehrere erste Kennungen zur Verfügung stellen. Dies kann automatisch durch die Konfigurationsdatenbank erfolgen, ohne dass eine menschliche Interaktion erforderlich wäre.

Wie bereits zuvor angedeutet, kann gemäß einer besonders zweckmäßigen Weiterbildung der Erfindung bei dem Verfahren vorgesehen sein, dass die Konfigurationsdatenbank der Mobilitätsmanagementeinheit mehrere erste Kennungen, d.h. eine Auswahl an ersten Kennungen, bereitstellt und dass die Mobilitätsmanagementeinheit diese Auswahl an ersten Kennungen speichert, und dass die Mobilitätsmanagementeinheit aus der Auswahl an ersten Kennungen eine Kennung übernimmt und die Schritte b1) bis d1) gemäß Anspruch 1 erneut durchgeführt werden. So kann die Mobilitätsmanagementeinheit beispielsweise über die S11-Schnittstellen zu anderen Mobilitätsmanagementeinheiten die bereitgestellte erste Kennung zu den anderen Mobilitätsmanagementeinheiten des Kernnetzwerkes senden und ebenso eine Anfrage an die anderen Mobilitätsmanagementeinheiten senden, in der sie anfragt, ob diesen diese erste Kennung bereits zugeordnet ist.

D.h., die Konfigurationsdatenbank stellt der Mobilitätsmanagementeinheit, der eine eindeutige Kennung zugeordnet werden soll, einmalig eine Auswahl an mehreren ersten Kennungen zu Verfügung. Auswahl an ersten Kennungen bedeutet im Sinne der Erfindung, dass die Konfigurationsdatenbank der Mobilitätsmanagementeinheit eine Vielzahl von ersten Kennungen zur Verfügung stellt. Als Auswahl an ersten Kennungen kann ein Bereich von ersten Kennungen, beispielsweise ein Bereich von A-Z oder 1-100, dienen. Nach der Zuordnung einer ersten Kennung ist eine Mobilitätsmanagementeinheit innerhalb des Kernnetzwerkes unverwechselbar gekennzeichnet. In der Regel behält eine Mobilitätsmanagementeinheit diese eindeutige Kennung daher immer bei. Bei den ersten Kennungen kann es sich beispielsweise um eine Nummerierung der Mobilitätsmanagementeinheiten handeln, wobei jede Mobilitätsmanagementeinheit eine andere Nummerierung erhält.

Die Mobilitätsmanagementeinheit speichert die zur Verfügung gestellte Auswahl an eindeutigen Kennungen in einer ihr zugeordneten Speichereinheit.

Die Mobilitätsmanagementeinheit übernimmt eine erste Kennung aus der zur Verfügung gestellten Auswahl an ersten Kennungen. Dabei ist es egal, welche erste Kennung die Mobilitätsmanagementeinheit aus der Auswahl an ersten Kennungen übernimmt bzw. auswählt. Anschließend wird/werden über die Schnittstellen, insbesondere die S11-Schnittstellen, in einer Interaktion zwischen der Mobilitätsmanagementeinheit mit den anderen Mobilitätsmanagementeinheiten des Kernnetzwerkes die übernommene erste Kennung von der Mobilitätsmanagementeinheit zu den anderen Mobilitätsmanagementeinheiten und/oder die weiteren Kennungen der anderen Mobilitätsmanagementeinheiten zu der Mobilitätsmanagementeinheit übertragen.

So kann die Mobilitätsmanagementeinheit die ihr bereitgestellte bzw. die von ihr übernommene erste Kennung über die entsprechenden Schnittstellen, insbesondere über die sogenannten offenen S11-Schnittstellen, zu den anderen Mobilitätsmanagementeinheiten des Kernnetzwerkes senden. Ferner kann die Mobilitätsmanagementeinheit eine Anfrage an die anderen Mobilitätsmanagementeinheiten senden, in der sie anfragt, ob einer der anderen Mobilitätsmanagementeinheiten die übernommene erste Kennung bereits zugeordnet ist.

In einem nachfolgenden Auswerteschritt werden die ersten Kennungen aller Mobilitätsmanagementeinheiten miteinander verglichen. So kann in dem nachfolgenden Auswerteschritt die Mobilitätsmanagementeinheit überprüfen, ob Antwortnachrichten von den anderen Mobilitätsmanagementeinheiten hinsichtlich Übereinstimmungen der ersten Kennung vorliegen bzw. ob die erste Kennung bereits einer anderen Mobilitätsmanagementeinheit zugeordnet ist. Bei Feststellung, dass keiner der anderen Mobilitätsmanagementeinheiten die übernommene erste Kennung zugeordnet ist, ordnet sich die Mobilitätsmanagementeinheit die erste eindeutige Kennung automatisch zu.

Gemäß einer besonders zweckmäßigen Weiterbildung der Erfindung kann bei dem Verfahren vorgesehen sein, dass bei der Feststellung, dass einer der anderen Mobilitätsmanagementeinheiten die bereitgestellte erste Kennung zugeordnet ist, die Mobilitätsmanagementeinheit, der eine eindeutige Kennung zugeordnet werden soll, aus der gespeicherten Auswahl an ersten Kennungen eine andere erste Kennung übernimmt und die Schritte b1) bis d1) gemäß Anspruch 1 erneut durchgeführt werden. So kann die Mobilitätsmanagementeinheit die übernommene weitere erste Kennung über die Schnittstellen zu den anderen Mobilitätsmanagementeinheiten des Kernnetzwerkes senden und ebenso eine Anfrage an die anderen Mobilitätsmanagementeinheiten senden, in der sie anfragt, ob diesen die übernommene weitere erste Kennung zugeordnet ist und anschließend können die Schritte c1) und d1) gemäß Anspruch 1 erneut durchgeführt werden.

D.h., bei der Feststellung, dass einer der anderen Mobilitätsmanagementeinheiten die übernommene ersten Kennung bereits zugeordnet ist, kann die Mobilitätsmanagementeinheit aus der Auswahl an ersten Kennungen eine weitere erste Kennung auswählen und bei den anderen Mobilitätsmanagementeinheiten wiederum anfragen, ob einem dieser anderen Mobilitätsmanagementeinheiten die weitere erste Kennung zugeordnet ist. Ist dies der Fall streicht die Mobilitätsmanagementeinheit die übernommene erste Kennung aus der Auswahl an ersten Kennungen und wählt eine andere ersten Kennung aus der, nunmehr reduzierten, Auswahl an ersten Kennungen aus. Durch die Speicherung der Auswahl an ersten Kennungen in einer der Mobilitätsmanagementeinheit zugeordneten Speichereinheit, ist eine Interaktion mit der Konfigurationsdatenbank des Kernnetzwerkes nicht erforderlich. Die Mobilitätsmanagementeinheit wählt solange eine weitere erste Kennung aus der Auswahl an ersten Kennungen aus, bis festgestellt wird, dass eine der ausgewählten ersten Kennungen noch nicht einer anderen Mobilitätsmanagementeinheit zugeordnet ist. Dabei greift die Mobilitätsmanagementeinheit auf die in ihrer Speichereinheit gespeicherte Auswahl an ersten Kennungen zu.

Vorteilhafterweise kann die Konfigurationsdatenbank der Mobilitätsmanagementeinheit, der eine eindeutige Kennung zugeordnet werden soll, auch bei dem Verfahren gemäß der zweiten Weiterentwicklung der Erfindung, einmalig eine Auswahl an mehreren ersten Kennungen, d.h. ein Pool an ersten Kennungen, zu Verfügung stellen.

Die Mobilitätsmanagementeinheit speichert die zur Verfügung gestellte Auswahl an ersten Kennungen in einer ihr zugeordneten Speichereinheit. Die Mobilitätsmanagementeinheit übernimmt irgendeine erste Kennung aus der zur Verfügung gestellten Auswahl an ersten Kennungen. Anschließend übersendet Mobilitätsmanagementeinheit eine Anfrage an die anderen Mobilitätsmanagementeinheiten innerhalb des Kernnetzwerkes, in der sie nach den Kennungen der anderen Mobilitätsmanagementeinheiten anfragt.

In einem nachfolgenden Auswerteschritt überprüft die Mobilitätsmanagementeinheit anhand der Antwortnachrichten der anderen Mobilitätsmanagementeinheiten, ob die ausgewählte erste Kennung bereits einer anderen Mobilitätsmanagementeinheit zugeordnet ist. Bei Feststellung, dass keiner der anderen Mobilitätsmanagementeinheiten die übernommene erste Kennung zugeordnet ist, ordnet sich die Mobilitätsmanagementeinheit die übernommene erste Kennung automatisch zu.

Ein Vorteil bei einem derartigen Verfahren ist, dass bei der Zuordnung einer eindeutigen Kennung zu einer bereits in das Kernnetzwerk implementierten Mobilitätsmanagementeinheit oder bei der Implementierung einer Mobilitätsmanagementeinheit in das Kernnetzwerk, die Konfigurationsdatenbank und damit ein Bediener der Konfigurationsdatenbank kaum noch eingreifen muss. Die Konfigurationsdatenbank stellt der Mobilitätsmanagementeinheit lediglich zu Beginn eine Auswahl an ersten Kennungen zu Verfügung. Danach übernimmt bzw. wählt die Mobilitätsmanagementeinheit automatisch irgendeine erste Kennung aus der Auswahl an ersten Kennungen aus und überprüft selbstständig, ob diese ausgewählte erste Kennung bereits eine andere Mobilitätsmanagementeinheit innerhalb des Kernnetzwerkes eindeutig kennzeichnet. Nach der Feststellung, dass eine ausgewählte erste Kennung noch nicht vergeben ist, ordnet sich die Mobilitätsmanagementeinheit die ausgewählte erste Kennung automatisch selber zu. Durch ein derartiges Verfahren kann das Auftreten von Fehlern bei der Zuordnung von eindeutigen Kennungen zu einer Mobilitätsmanagementeinheit verhindert bzw. deutlich vermindert werden. Insbesondere in der Planungsphase eines Kernnetzwerkes eines SAE/LTE-Kommunikationssystems ist ein derartiges Verfahren vorteilhaft, da die Zuordnung von eindeutigen Kennungen zu einer oder mehreren Mobilitätsmanagementeinheit(en) zum Großteil durch die Mobilitätsmanagementeinheit(en) selbst erfolgt. Durch die Interaktion mit den anderen Mobilitätsmanagementeinheiten ist sichergestellt, dass es bei der Zuordnung von eindeutigen Kennungen zu den Mobilitätsmanagementeinheiten nicht zu Doppelzuordnungen kommt.

Bevorzugt ist ein Verfahren, bei dem die Mobilitätsmanagementeinheit die Antwortnachrichten der anderen Mobilitätsmanagementeinheiten speichert und bei Feststellung, dass einer der anderen Mobilitätsmanagementeinheiten die übernommene erste Kennung zugeordnet ist, die Mobilitätsmanagementeinheit aus der gespeicherten Auswahl an ersten Kennungen eine andere erste Kennung übernimmt, und anhand der gespeicherten Antwortnachrichten der anderen Mobilitätsmanagementeinheiten überprüft, ob die andere erste Kennung einer anderen Mobilitätsmanagementeinheit zugeordnet ist.

D.h., bei der Feststellung, dass einer der anderen Mobilitätsmanagementeinheiten die übernommene erste Kennung bereits zugeordnet ist, wählt die Mobilitätsmanagementeinheit aus der gespeicherten Auswahl an ersten Kennungen eine weitere erste Kennung aus. Da die Mobilitätsmanagementeinheit die Kennungen der anderen Mobilitätsmanagementeinheiten bereits kennt, überprüft die Mobilitätsmanagementeinheit, ob die weitere ausgewählte erste Kennung bereits vergeben ist. Ist dies der Fall, wählt die Mobilitätsmanagementeinheit solange eine erste Kennung aus der gespeicherten Auswahl aus, bis sie feststellt, dass diese noch keiner anderen Mobilitätsmanagementeinheit zugeordnet ist.

Der besondere Vorteil dieses Verfahrens liegt darin, dass sehr wenig Datenverkehr zwischen der Konfigurationsdatenbank und der Mobilitätsmanagementeinheit sowie zwischen der Mobilitätsmanagementeinheit und den anderen Mobilitätsmanagementeinheiten erforderlich ist. Die Konfigurationsdatenbank stellt der Mobilitätsmanagementeinheit, der eine eindeutige Kennung zugeordnet werden soll, einmalig eine Auswahl an ersten Kennungen zur Verfügung. D.h., die Konfigurationsdatenbank überträgt der Mobilitätsmanagementeinheit eine Liste an verschiedenen ersten Kennungen. Die Mobilitätsmanagementeinheit speichert die Auswahl an ersten Kennungen in ihrer Speichereinheit. Nach der Speicherung der Auswahl an ersten Kennungen arbeitet die Mobilitätsmanagementeinheit völlig autark. D.h., die Mobilitätsmanagementeinheit wählt aus der Auswahl an ersten Kennungen eine erste Kennung aus und fragt bei den anderen Mobilitätsmanagementeinheiten nach deren Kennungen an. Anhand der Rückantworten der anderen Mobilitätsmanagementeinheiten kann die Mobilitätsmanagementeinheit feststellen, ob die übernommene bzw. ausgewählte erste Kennung noch frei ist oder bereits einer anderen Mobilitätsmanagementeinheit zugeordnet ist. Ist die ausgewählte erste Kennung bereits vergeben, wählt die Mobilitätsmanagementeinheit aus der gespeicherten Auswahl an ersten Kennungen eine weitere erste Kennung aus und vergleicht diese wieder mit den Kennungen der anderen Mobilitätsmanagementeinheiten. Nach dem Auswählen einer weiteren ersten Kennung ist es nicht mehr erforderlich eine Anfrage an die anderen Mobilitätsmanagementeinheiten zu senden, da die Rückantworten der Mobilitätsmanagementeinheit bereits vorliegen. Diese werden zu Vergleichszwecken vorteilhafterweise in der Speichereinheit der Mobilitätsmanagementeinheit gespeichert.

Bevorzugt ist es, wenn die Mobilitätsmanagementeinheit nach der Zuordnung der bereitgestellten ersten Kennung der Konfigurationsdatenbank mitteilt, welche erste Kennung ihr zugeordnet ist. Diese kann die der Mobilitätsmanagementeinheit zugeordnete eindeutige Kennung aus Ihrer Liste streichen, so dass sie einer weiteren Mobilitätsmanagementeinheit, der eine eindeutig Kennung zugeordnet werden soll, diese Kennung nicht zur Verfügung stellt. D.h., stellt die Konfigurationsdatenbank einer weiteren Mobilitätsmanagementeinheit eine Auswahl an ersten Kennungen zu Verfügung, stellt sie dieser die der vorherigen Mobilitätsmanagementeinheit zugeordnete erste Kennung nicht mehr zur Auswahl zur Verfügung. Dadurch kann unnötiger Mehraufwand vermieden werden.

Gemäß einer weiteren zweckmäßigen Weiterbildung der Erfindung kann bei einem der Verfahren vorgesehen sein, dass die Konfigurationsdatenbank der Mobilitätsmanagementeinheit als wenigstens eine erste Kennung eine globale eindeutige Mobilitätsmanagementeinheits-Identifikationsnummer oder als Auswahl an ersten Kennungen mehrere globale eindeutige Mobilitätsmanagementeinheits-Identifikationsnummern zur Verfügung stellt. Eine globale eindeutige Mobilitätsmanagementeinheits-Identifikationsnummer eignet sich besonders gut, um Mobilitätsmanagementeinheiten unverwechselbar innerhalb eines Kernnetzwerkes eines SAE/LTE-Kommunikationssystems zu kennzeichnen. Die globale eindeutige Mobilitätsmanagementeinheits-Identifikationsnummer, abgekürzt als GUMMEI bezeichnet, kann aus verschiedenen Einzelkennungen zusammengesetzt sein.

So kann die globale eindeutige Mobilitätsmanagementeinheits-Identifikationsnummer (GUMMEI) vorteilhafterweise aus einer öffentlichen landgestützten Mobilfunknetzkennung, der sogenannten PLMN-ID, und aus einer Mobilitätsmanagementeinheit-Identifizierung, der sogenannten MMEI, zusammengesetzt sein. Die PLMN-ID (PLMN-ID = Public Land Mobile Network Identifier) umfasst wiederum eine Länderkennung, die sogenannte MCC (MCC = Mobile Country Code), sowie eine Identifizierung eines Netzwerkanbieters, die sogenannte MNC (MNC = Mobile Network Code). Die Mobilitätsmanagementeinheit-Identifizierung (MMEI) kann vorteilhafterweise eine Mobilitätsmanagementeinheit-Gruppenidentifizierung (MME Group ID) sowie eine Mobilitätsmanagementeinheit-Kennzahl (MME Code) aufweisen. Die MME Group ID (MME Group ID = Mobilitätsmanagementeinheit Gruppen Identifizierung) bezeichnet die Zugehörigkeit einer MME zu einer bestimmten Gruppe innerhalb des Kernnetzwerkes des SAE/LTE-Kommunikationssystems. Beispielsweise kann die MME Group ID alle MMEs einer bestimmten Ortschaft oder eines bestimmten Ortsteils innerhalb eines Ortes kennzeichnen. Die MME Code (MME Code = Mobilitätsmanagementeinheit Kennzahl) gibt die Nummerierung einer MME innerhalb einer derartigen bestimmten Gruppe an.

So kann die globale eindeutige Mobilitätsmanagementeinheits-Identifikationsnummer (GUMMEI) angeben, dass eine bestimmte Mobilitätsmanagementeinheit Teil des Vodafonekernnetzwerkes in Deutschland ist. Ferner kann die GUMMEI angeben, dass die bestimmte Mobilitätsmanagementeinheit der Gruppe aller Mobilitätsmanagementeinheiten in Düsseldorf angehört und dort die Kennzahl 23 aufweist.

Zur eindeutigen Kennzeichnung einer Mobilitätsmanagementeinheit können aber auch andere Kennungen dienen.

Die Konfigurationsdatenbank ist bevorzugt Teil einer Betriebs- und Wartungseinheit auf einer Rechnereinheit. Die Betriebs- und Wartungseinheit wird häufig auch als Operations&Maintenance-Einheit bezeichnet. Die Konfigurationsdatenbank kann bevorzugt Teil des Kernnetzwerkes des SAE/LTE-Kommunikationssystems sein. Die Mobilitätsmanagementeinheit, der eine eindeutige Kennung zugewiesen werden soll, wird mit der Konfigurationsdatenbank derart verbunden, insbesondere über sogenannte S12-Schnittstellen, dass zwischen der Konfigurationsdatenbank und der Mobilitätsmanagementeinheit Daten ausgetauscht werden können.

Gemäß dem zweiten Aspekt der Erfindung wird die Aufgabe durch ein Verfahren zur Implementieren einer Mobilitätsmanagementeinheit in ein Kernnetzwerk eines SAE/LTE-Kommunikationssystems gelöst, wobei dieses Verfahren durch folgende Schritte gekennzeichnet ist:
f) eine neue Mobilitätsmanagementeinheit wird dem Kernnetzwerk hinzugefügt und über Schnittstellen mit anderen Mobilitätsmanagementeinheiten des Kernnetzwerkes verbunden;
g) der neu hinzugefügten Mobilitätsmanagementeinheit wird eine eindeutige Kennung mittels eines Verfahrens nach dem ersten Aspekt der Erfindung zugeordnet.

Ein derartiges Verfahren ermöglicht eine annähernd automatische Implementierung einer Mobilitätsmanagementeinheit in ein Kernnetzwerk eines SAE/LTE-Kommunikationssystems. Nach dem Verbinden der neu hinzukommenden Mobilitätsmanagementeinheit mit den anderen, bereits im Kernnetzwerk implementierten, Mobilitätsmanagementeinheiten, wird der neu hinzukommenden Mobilitätsmanagementeinheit eine eindeutige Kennung zugeordnet. Dies erfolgt durch das Verfahren zur Zuweisung eindeutiger Kennungen zu einer Mobilitätsmanagementeinheit in einem Kernnetzwerk eines SAE/LTE-Kommunikationssystems gemäß dem ersten Aspekt der Erfindung. Die von einem Installateur erforderliche Arbeit wird durch ein derartiges Verfahren auf ein Minimum reduziert. Der Installateur verbindet die neu hinzukommende Mobilitätsmanagementeinheit über entsprechende Schnittstellen, insbesondere sogenannte offene S11-Schnittstellen, mit den bereits in das Kernnetzwerk implementierten Mobilitätsmanagementeinheiten. Anschließend sorgt der Netzbetreiber dafür, dass die Konfigurationsdatenbank der neu hinzukommenden Mobilitätsmanagementeinheit wenigstens eine erste Kennung, insbesondere eine Auswahl an ersten Kennungen, zur Verfügung stellt.

Gemäß eines dritten Aspektes der Erfindung wird die Aufgabe durch eine Mobilitätsmanagementeinheit eines Kernnetzwerkes eines SAE/LTE-Kommunikationssystems, mit wenigstens einer Schnittstelle, insbesondere wenigstens einer S11-Schnittstelle, zu anderen Mobilitätsmanagementeinheiten des Kernnetzwerkes und mit eine Schnittstelle, insbesondere einer S12-Schnittstelle, zu einer Konfigurationsdatenbank zum Aufbau einer Verbindung und zum Übertragen von Daten zu der Konfigurationsdatenbank, bei der die Mobilitätsmanagementeinheit Mittel zum Durchführen eines Verfahrens gemäß dem ersten oder zweiten Aspekt der Erfindung aufweist, gelöst.

Bei der Mobilitätsmanagementeinheit ist vorteilhafterweise eine Empfangseinrichtung zum Empfang wenigstens einer ersten Kennung oder einer Auswahl an ersten Kennungen, die beispielseise von der Konfigurationsdatenbank zur Verfügung gestellt werden, vorgesehen. Ferner ist bevorzugt eine Übernahmeeinrichtung zur Übernahme wenigstens einer ersten Kennung und eine Sende- und Empfangseinrichtung zum Übertragen der übernommenen wenigstens einen ersten Kennung und/oder von Anfragen zu anderen Mobilitätsmanagementeinheiten des Kernnetzwerkes und zum Empfangen von Kennungen und/oder Antwortnachrichten von anderen Mobilitätsmanagementeinheiten über die Schnittstelle vorgesehen. Des Weiteren weist die Mobilitätsmanagementeinheit vorteilhafterweise eine Auswerteeinrichtung zum Vergleichen der Kennungen aller Mobilitätsmanagementeinheiten auf. Die Auswerteeinrichtung dient beispielsweise zur Überprüfung, ob Antwortnachrichten von den anderen Mobilitätsmanagementeinheiten hinsichtlich Übereinstimmungen der übernommenen wenigstens einen ersten Kennung vorliegen. Ferner sind vorteilhafterweise Mittel zum Zuordnen der bereitgestellten bzw. übernommenen Kennung vorgesehen.

Die Mobilitätsmanagementeinheit weist vorzugsweise Mittel zum Durchführen eines Verfahrens nach dem ersten, dem zweiten oder dem dritten Aspekt der Erfindung auf.

Über die Schnittstelle, insbesondere eine offene S11-Schnittstelle, kann die Mobilitätsmanagementeinheit mit den anderen Mobilitätsmanagementeinheiten des Kernnetzwerkes physikalisch verbunden werden. Die Mobilitätsmanagementeinheiten können über diese Schnittstelle bidirektional Daten untereinander austauschen. Ferner kann die Mobilitätsmanagementeinheit über eine weitere Schnittstelle, insbesondere eine S12-Schnittstelle, mit der Konfigurationsdatenbank verbunden werden. Diese weitere Schnittstelle dient zum Aufbau einer Verbindung zu einer Konfigurationsdatenbank, insbesondere des Kernnetzwerkes, und zum Übertragen von Daten zu der Konfigurationsdatenbank. Über die Empfangseinrichtung kann die Mobilitätsmanagementeinheit wenigstens eine eindeutige Kennung oder eine Auswahl an eindeutigen Kennungen, die von der Konfigurationsdatenbank zur Verfügung gestellt werden, empfangen. Die Übernahmeeinrichtung dient zur Übernahme einer ersten Kennung bzw. zum Auswählen einer ersten Kennung aus einer Auswahl an ersten Kennungen. Nach der Übernahme einer ersten Kennung kann die Mobilitätsmanagementeinheit über eine, ihr zugeordnete Sende- und Empfangseinrichtung mit den anderen Mobilitätsmanagementeinheiten des Kernnetzwerkes kommunizieren. Die Auswerteeinrichtung dient zum Überprüfen, ob Antwortnachrichten von den anderen Mobilitätsmanagementeinheiten hinsichtlich Übereinstimmungen der übernommenen ersten Kennung vorliegen und ob die übernommene ersten Kennung einer anderen Mobilitätsmanagementeinheiten zugeordnet ist. Ferner weist die Mobilitätsmanagementeinheit Mittel zum Zuordnen der übernommenen ersten Kennung auf. D.h., die Mobilitätsmanagementeinheit kann nach Feststellung, dass die von ihr übernommene erste Kennung keiner der anderen Mobilitätsmanagementeinheiten zugeordnet ist, sich die erste, d.h. eindeutige, Kennung selbst zuordnen.

Eine derartige Mobilitätsmanagementeinheit ist sehr flexibel implementierbar, da sie in der Lage ist selbst zu prüfen, ob sie sich eine zur Verfügung gestellte eindeutige Kennung zuordnen kann oder nicht. Dabei kommt es insbesondere darauf an, dass der Mobilitätsmanagementeinheit, die beispielsweise einem Kernnetzwerk eines SAE/LTE-Kommunikationssystems hinzugefügt wird, eine eindeutige, unverwechselbare Kennung zugeordnet werden kann. Wie die Kennung letztendlich lautet ist zweitrangig, solange sie nur eine Mobilitätsmanagementeinheit eindeutig kennzeichnet.

Zur Durchführung des Verfahrens umfasst die Mobilitätsmanagementeinheit vorzugsweise eine Speichereinheit zur Speicherung der zur Verfügung gestellten Auswahl an Kennungen.

Die Erfindung und ihre Weiterbildungen sowie deren Vorteile werden nachfolgend anhand von Zeichnungen näher erläutert. Es zeigen jeweils schematisch:
- Figur 1: einen Teil eines Kernnetzwerkes eines SAE/LTE- Kommunikationssystems, mit einer Konfigurationsdatenbank und drei erfindungsgemäßen Mobilitätsmanagementeinheiten;
- Figur 2: einen Teil eines Kernnetzwerkes eines SAE/LTE- Kommunikationssystems, mit einer Konfigurationsdatenbank und drei erfindungsgemäßen Mobilitätsmanagementeinheiten, sowie drei Basisstationen eines Zugangsnetzwerkes, die mit den Mobilitätsmanagementeinheiten verbunden sind.

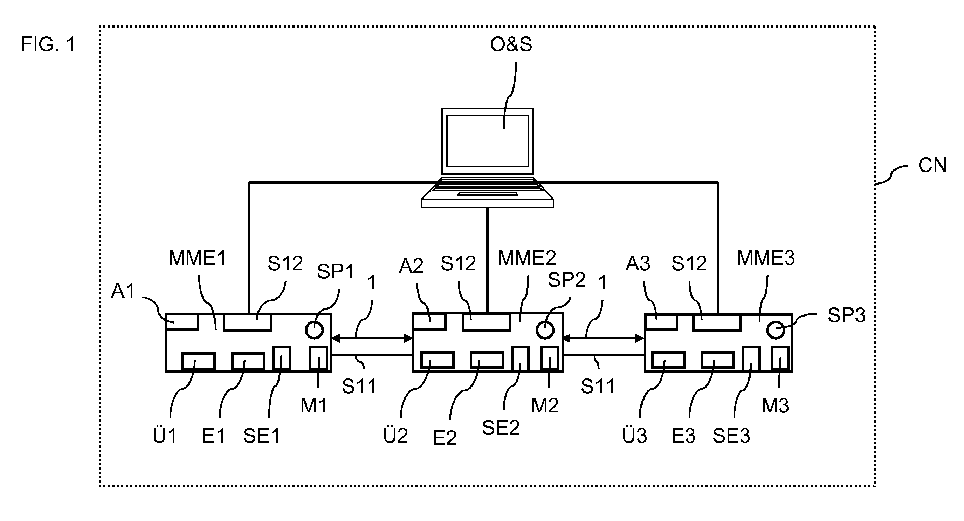

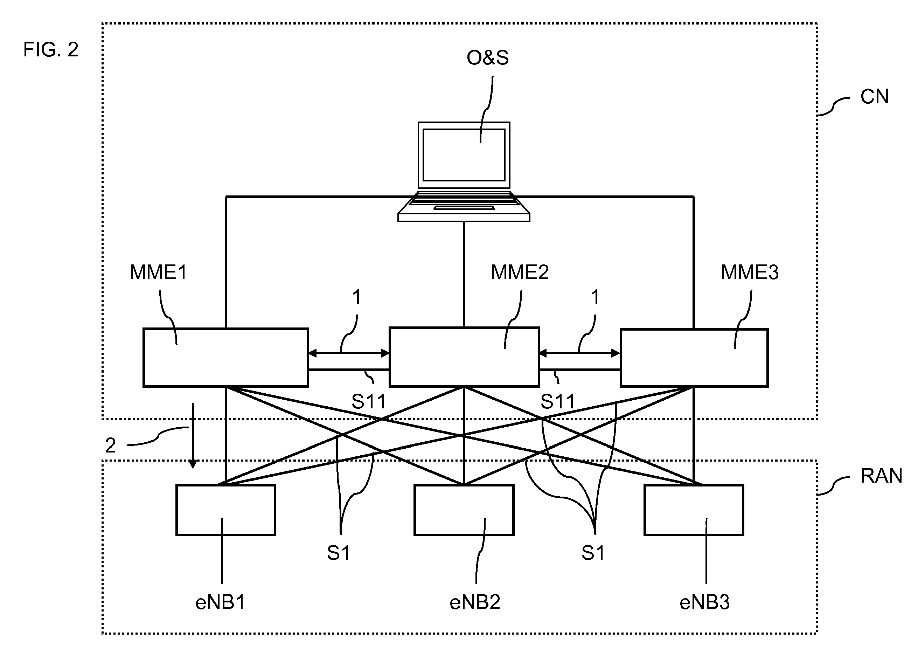

Elemente mit gleicher Funktion und Wirkungsweise sind in den Figuren 1 und 2 jeweils mit denselben Bezugszeichen versehen.

In den Fig. 1 und 2 sind vorteilhafte Bespiele von erfindungsgemäßen Mobilitätsmanagementeinheiten MME1, MME2, MME3 dargestellt.

Fig. 1 zeigt schematisch einen Teil eines Kernnetzwerkes CN eines SAE/LTE-Kommunikationssystems, mit einer Konfigurationsdatenbank O&S und drei erfindungsgemäßen Mobilitätsmanagementeinheiten MME1, MME2, MME3. Die Mobilitätsmanagementeinheiten sind über sogenannte offene S11-Schnittstellen miteinander verbunden, so dass jede Mobilitätsmanagementeinheit mit allen anderen Mobilitätsmanagementeinheiten kommunizieren kann. Über die offenen S11-Schnittstellen können Daten ausgetauscht werden, was durch das Bezugszeichen 1 angedeutet ist.

Die Mobilitätsmanagementeinheiten MME1, MME2, MME3 weisen neben den S11-Schnittstellen jeweils eine Schnittstelle S12 zu einer Konfigurationsdatenbank O&S auf. Die Schnittstellen S12 dienen zum Aufbau einer Verbindung zu der Konfigurationsdatenbank O&S bzw. zum Übertragen von Daten von und zu der Konfigurationsdatenbank O&S. Jede Mobilitätsmanagementeinheit MME1, MME2, MME3 weist ferner eine Empfangseinrichtung E1, E2, E3 zum Empfang wenigstens einer ersten Kennung oder einer Auswahl an ersten Kennungen, die von der Konfigurationsdatenbank O&S bereitgestellt werden, auf. Die Übernahmeeinrichtung Ü1, Ü2, Ü3 dienen zur Übernahme bzw. zum Auswählen einer ersten Kennung. Jeder Mobilitätsmanagementeinheit MME1, MME2, MME3 weist ferner eine Sende- und Empfangseinrichtung SE1, SE2, SE3 zum Senden der bereitgestellten wenigstens einen ersten Kennung und/oder einer Anfrage zu anderen Mobilitätsmanagementeinheiten MME1, MME2, MME3 des Kernnetzwerkes CN über die Schnittstellen S11 auf. Die Auswerteeinrichtungen A1, A2, A3 dienen zum Überprüfen, ob Antwortnachrichten von den anderen Mobilitätsmanagementeinheiten MME1, MME2, MME3 hinsichtlich Übereinstimmungen der übernommenen ersten Kennung vorliegen, und/oder zum Überprüfen anhand der von den anderen Mobilitätsmanagementeinheiten MME1, MME2, MME3 gesendeten Antwortnachrichten, ob die übernommene erste Kennung einer anderen Mobilitätsmanagementeinheiten MME1, MME2, MME3 zugeordnet ist. Des Weiteren weist eine jede Mobilitätsmanagementeinheit MME1, MME2, MME3 Mittel M1, M2, M3 zum Zuordnen der übernommenen Kennung auf. Diese Mittel M1, M2, M3 ermöglichen, dass sich jede Mobilitätsmanagementeinheit MME1, MME2, MME3 die zunächst übernommene erste Kennung nach einem Überprüfungsprozess selber zuordnen kann, so dass jede Mobilitätsmanagementeinheit MME1, MME2, MME3 eine eindeutige, unverwechselbare Kennung aufweist, über die sie innerhalb eines SAE/LTE-Kommunikationssystems angesteuert werden kann.

Jede Mobilitätsmanagementeinheit MME1, MME2, MME3 weist des Weiteren vorteilhafterweise eine Speichereinheit SP1, SP2, SP3 auf. In der Speichereinheit SP1, SP2, SP3 speichert eine Mobilitätsmanagementeinheit MME1, MME2, MME3 die ihr zur Verfügung gestellte Auswahl an ersten Kennungen. Ferner kann die Speichereinheit SP1, SP2, SP3 die Rückantworten bzw. Antwortnachrichten der jeweils anderen Mobilitätsmanagementeinheit MME1, MME2, MME3 speichern. Durch die Speicherung dieser Daten kann eine Mobilitätsmanagementeinheit MME1, MME2, MME3 sich sehr einfach selbstständig eine eindeutige Kennung zuordnen, die noch keine andere Mobilitätsmanagementeinheit MME1, MME2, MME3 kenzeichnet.

Fig. 2 zeigt schematisch einen Teil eines Kernnetzwerkes CN eines SAE/LTE-Kommunikationssystems, mit einer Konfigurationsdatenbank O&S und drei erfindungsgemäßen Mobilitätsmanagementeinheiten MME1, MME2, MME3, sowie drei Basisstationen eNB1, eNB2, eNB3 eines Zugangsnetzwerkes RAN. Die Basisstationen eNB1, eNB2, eNB3 sind mit den Mobilitätsmanagementeinheiten MME1, MME2, MME3 über Schnittstellen S1, insbesondere über sogenannte S1-flex-Schnittstellen, verbunden. Dabei ist jede Basisstation eNB1, eNB2, eNB3 mit jedem der Mobilitätsmanagementeinheiten MME1, MME2, MME3 verbunden. Der Pfeil der durch Bezugszeichen 2 gekennzeichnet ist, deutet an, dass die zugeordnete eindeutige Kennung einer jeden Mobilitätsmanagementeinheit MME1, MME2, MME3 zu jeder Basisstation eNB1, eNB2, eNB3 übertragen wird, so dass die Basisstation eNB1, eNB2, eNB3 die jeweiligen Mobilitätsmanagementeinheiten MME1, MME2, MME3 kennen und ansteuern können.

### Bezugszeichenliste

- 1: Datenaustausch zwischen den MMEs
- 2: Datenaustausch zwischen den MMEs und den eNBs

- O&S: Konfigurationsdatenbank
- S1: Flex-Schnittstellen zwischen den MMEs und den eNBs
- S11: Schnittstellen zwischen den MMEs
- S12: Schnittstelle einer MME zu der O&S

- A1, A2, A3: Auswerteeinrichtungen
- Ü1, Ü2, Ü3: Übernahmeeinrichtungen
- E1, E2, E3: Empfangseinrichtung
- SE1, SE2, SE3: Sende- und Empfangseinrichtungen
- M1, M2, M3: Mittel zum Zuordnen von Kennungen
- SP1, SP2, SP3: Speichereinheiten
- MME1; MME2, MME3: Mobilitätsmanagementeinheiten
- eNB1, eNB2, eNB3: Basisstationen des Zugangsnetzwerkes

- CN: Kernnetzwerk
- RAN: Zugangsnetzwerk
- SAE/LTE: System Architecture Evolution/ Long Term Evolution

## Patentansprüche

1. Verfahren zur Zuweisung einer eindeutigen Kennung zu einer Mobilitätsmanagementeinheit in einem Kernnetzwerk eines SAE/LTE-Kommunikationssystems, dass durch folgende Schritte **gekennzeichnet** ist:
a1) Bereitstellen wenigstens einer ersten Kennung an eine Mobilitätsmanagementeinheit (MME3),
b1) Übertragen der wenigstens einen ersten Kennung von der Mobilitätsmanagementeinheit (MME3) an eine Auswahl von anderen Mobilitätsmanagementeinheiten (MME1, MME2) und/oder Übertragen von der Auswahl von anderen Mobilitätsmanagementeinheiten (MME1, MME2) zugeordneten weiteren Kennungen an die Mobilitätsmanagementeinheit (MME3),
c1) Vergleichen der weiteren Kennungen mit der wenigstens einen ersten Kennung zur Feststellung der Eindeutigkeit der wenigstens einen ersten Kennung,
d1) Zuweisen der wenigstens einen ersten Kennung zu der Mobilitätsmanagementeinheit (MME3) bei Feststellung der Eindeutigkeit der wenigstens einen ersten Kennung.

2. Verfahren nach Anspruch 1, **dadurch gekennzeichnet, dass** die wenigstens eine erste Kennung von einer Konfigurationsdatenbank (O&S) über eine Datenverbindung bereitgestellt wird, und/oder dass die wenigstens eine erste Kennung und/oder die weiteren Kennungen über Schnittstellen (S11) übertragen werden.

3. Verfahren nach Anspruch 1 oder 2, **dadurch gekennzeichnet, dass** die Auswahl von anderen Mobilitätsmanagementeinheiten (MME1, MME2) die direkten Nachbarn der Mobilitätsmanagementeinheit (MME3) aufweist.

4. Verfahren nach einem der vorhergehenden Ansprüche, **dadurch gekennzeichnet, dass** der Vergleich der weiteren Kennungen mit der wenigstens einen ersten Kennung in der Mobilitätsmanagementeinheit (MME3) und/oder in einer Mobilitätsmanagementeinheit (MME1, MME2) aus der Auswahl von anderen Mobilitätsmanagementeinheiten (MME1, MME2) durchgeführt wird.

5. Verfahren nach Anspruch 4, **dadurch gekennzeichnet, dass** in Schritt b1) die Mobilitätsmanagementeinheit (MME3) die bereitgestellte wenigstens eine erste Kennung zu den anderen Mobilitätsmanagementeinheiten (MME1, MME2) des Kernnetzwerkes (CN) zusammen mit der Anfrage, ob diesen die wenigstens eine erste Kennung zugeordnet ist, überträgt und dass in Schritt c1) die Mobilitätsmanagementeinheit (MME3) anhand von Antwortnachrichten der anderen Mobilitätsmanagementeinheiten (MME1, MME2) überprüft, ob Übereinstimmungen der Kennungen vorliegen.

6. Verfahren nach einem der vorhergehenden Ansprüche 2 bis 5, **dadurch gekennzeichnet sind, dass** bei Feststellung, dass einer der anderen Mobilitätsmanagementeinheiten (MME1, MME2) die bereitgestellte wenigstens eine Kennung zugeordnet ist, die Mobilitätsmanagementeinheit (MME3) dies der Konfigurationsdatenbank (O&S) mitteilt und die Konfigurationsdatenbank (O&S) der Mobilitätsmanagementeinheit (MME3) eine wenigstens eine andere erste Kennung zur Verfügung stellt, und dass die Schritte b1) bis d1) gemäß Anspruch 1 erneut durchgeführt werden, und/oder dass in Schritt a1) die Konfigurationsdatenbank (O&S) der Mobilitätsmanagementeinheit (MME3) eine Auswahl an ersten Kennungen zu Verfügung stellt, dass die Mobilitätsmanagementeinheit (MME3) diese Auswahl an ersten Kennungen speichert, dass die Mobilitätsmanagementeinheit (MME3) aus der Auswahl an ersten Kennungen eine erste Kennung übernimmt und dass die Schritte b1) bis d1) gemäß Anspruch 1 erneut durchgeführt werden.

7. Verfahren nach einem der Ansprüche 5 oder 6, **dadurch gekennzeichnet sind, dass** die Mobilitätsmanagementeinheit (MME3) die Antwortnachrichten der anderen Mobilitätsmanagementeinheiten (MME1, MME2) speichert und dass bei Feststellung, dass einer der anderen Mobilitätsmanagementeinheiten (MME1, MME2) die bereitgestellte wenigstens eine erste Kennung zugeordnet ist, die Mobilitätsmanagementeinheit (MME3) aus der gespeicherten Auswahl an ersten Kennungen eine andere erste Kennung übernimmt, und anhand der gespeicherten Antwortnachrichten der anderen Mobilitätsmanagementeinheiten (MME1, MME2) überprüft, ob die andere erste Kennung einer anderen Mobilitätsmanagementeinheit (MME1, MME2) zugeordnet ist.

8. Verfahren nach einem der Ansprüche 2 bis 7, **dadurch gekennzeichnet, dass** die Mobilitätsmanagementeinheit (MME3) nach der Zuordnung der übernommenen ersten Kennung der Konfigurationsdatenbank (O&S) mitteilt, welche erste Kennung ihr zugeordnet ist.

9. Verfahren nach einem der Ansprüche 2 bis 8, **dadurch gekennzeichnet, dass** die Konfigurationsdatenbank (O&S) der Mobilitätsmanagementeinheit (MME3) als wenigstens eine erste Kennung eine globale eindeutige Mobilitätsmanagementeinheits-Identifikationsnummer (GUMMEI) oder als Auswahl an Kennungen mehrere globale eindeutige Mobilitätsmanagementeinheits-Identifikationsnummern (GUMMEI) zur Verfügung stellt.

10. Verfahren nach Anspruch 9, **dadurch gekennzeichnet, dass** eine globale eindeutige Mobilitätsmanagementeinheits-Identifikationsnummer (GUMMEI) folgende Bestandteile umfasst:
- eine öffentliche landgestützte Mobilfunknetzkennung (PLMN-ID), die eine Länderkennung (MCC) sowie eine Identifizierung eines Netzwerkanbieters (MNC) aufweist,
- und eine Mobilitätsmanagementeinheit-Identifizierung (MMEI), die eine Mobilitätsmanagementeinheit-Gruppenidentifizierung (MME Group ID) sowie eine Mobilitätsmanagementeinheit-Kennzahl (MME Code) aufweist.

11. Verfahren nach einem der Ansprüche 2 bis 10, **dadurch gekennzeichnet, dass** die Datenverbindung zwischen der Konfigurationsdatenbank (O&S) und der Mobilitätsmanagementeinheit (MME3) über Schnittstellen (S12) erfolgt.

12. Verfahren zur Implementieren einer Mobilitätsmanagementeinheit in ein Kernnetzwerk eines SAE/LTE-Kommunikationssystems, dass durch folgende Schritte **gekennzeichnet** ist:
f) eine neue Mobilitätsmanagementeinheit (MME3) wird dem Kernnetzwerk (CN) hinzugefügt und über Schnittstellen (S11) mit anderen Mobilitätsmanagementeinheiten (MME1, MME2) des Kernnetzwerkes (CN) verbunden;
g) der neu hinzugefügten Mobilitätsmanagementeinheit (MME3) wird eine eindeutige Kennung mittels eines Verfahrens nach einem der Ansprüche 1 bis 11 zugeordnet.

13. Mobilitätsmanagementeinheit eines Kernnetzwerkes eines SAE/LTE-Kommunikationssystems, mit wenigstens einer Schnittstelle (S11) zu anderen Mobilitätsmanagementeinheiten (MME1, MME2) des Kernnetzwerkes und mit eine Schnittstelle (S12) zu einer Konfigurationsdatenbank (O&S) zum Aufbau einer Verbindung und zum Übertragen von Daten zu der Konfigurationsdatenbank (O&S), **dadurch gekennzeichnet, dass** die Mobilitätsmanagementeinheit (MM3) Mittel zum Durchführen eines Verfahrens nach einem der vorhergehenden Ansprüche 1 bis 12 aufweist.

14. Mobilitätsmanagementeinheit nach Anspruch 13, **dadurch gekennzeichnet, dass** eine Empfangseinrichtung (E1, E2, E3) zum Empfang wenigstens einer ersten Kennung oder einer Auswahl an ersten Kennungen, die von der Konfigurationsdatenbank (O&S) zur Verfügung gestellt werden, vorgesehen ist, dass eine Übernahmeeinrichtung (Ü1, Ü2, Ü3) zur Übernahme einer ersten Kennung vorgesehen ist, dass eine Sende- und Empfangseinrichtung (SE1, SE2, SE3) zum Übertragen der übernommenen ersten Kennung und/oder von Anfragen zu anderen Mobilitätsmanagementeinheiten (MME1, MME2) des Kernnetzwerkes (CN) und zum Empfangen von weiteren Kennungen und/oder Antwortnachrichten von anderen Mobilitätsmanagementeinheiten (MME1, MME2) über die Schnittstelle (S11) vorgesehen ist, dass eine Auswerteeinrichtung (A1, A2, A3) zum Vergleichen der Kennungen aller Mobilitätsmanagementeinheiten (MME1, MME2, MME3) vorgesehen ist und dass Mittel (M1, M2, M3) zum Zuordnen der übernommenen ersten Kennung vorgesehen sind.

15. Mobilitätsmanagementeinheit nach Anspruch 13 oder 14, **dadurch gekennzeichnet, dass** die Mobilitätsmanagementeinheit (MM3) eine Speichereinheit (SP1, SP2, SP3) zur Speicherung der zur Verfügung gestellten Auswahl an ersten Kennungen und/oder der Antwortnachrichten der Mobilitätsmanagementeinheiten (MME1, MME2) umfasst.
